# EUROPÄISCHE PATENTSCHRIFT

(11) **EP 2 871 752 B1**
(45) Veröffentlichungstag und Bekanntmachung des Hinweises auf die Patenterteilung: **03.01.2018**
(21) Anmeldenummer: 13192349.2
(22) Anmeldetag: 11.11.2013
(51) Int. Cl.: H02K 1/27

(54) **Läufer einer rotatorischen permanenterregten Synchronmaschine**
Rotor of a rotational permanently excited synchronous motor
Rotor d'une machine synchrone rotative à excitation permanente

(43) Veröffentlichungstag der Anmeldung: 13.05.2015
(73) Patentinhaber: Siemens Aktiengesellschaft, 80333 München (DE)
(72) Erfinder: Bähr, Hubertus, 97631 Bad Königshofen (DE); Eckert, Rainer, 97616 Bad Neustadt / Herschfeld (DE)

(56) Entgegenhaltungen:
- EP-A1- 1 898 512
- US-A1- 2009 267 437

## Beschreibung

Die Erfindung betrifft einen Läufer einer rotatorischen permanenterregten Synchronmaschine und eine permanentmagneterregte Synchronmaschine.

Rotatorische permanenterregte Synchronmaschinen sind normalerweise als Radialflussmaschinen ausgebildet, wobei der Läufer als Außenläufer oder als Innenläufer ausgebildet ist.

Insbesondere die Läufer für Innenläufermaschinen weisen dabei für vielfältige Anwendungen Schalenmagnete auf, die entweder direkt auf eine Welle geklebt sind oder sich am Blechpaket des Läufers befinden.

Des Weiteren sind auch innenliegende Permanentmagnete im Blechpaket eines Läufers bekannt.

Um bei Oberflächenmagneten nunmehr eine exakte Positionierung der Schalenmagnete auf einer rundlichen Oberfläche zu erhalten, ist eine exakte und damit aufwändige Montage notwendig. Um an der gesamten Umfangsoberfläche eines Läufers nunmehr eine exakte Positionierung der Schalenmagnete zu erhalten, d.h. eine räumlich genaue Anordnung von magnetischen Polen und deren Pollücken zu erhalten, ist eine exakte, reproduzierbare Positionierung und Fixierung der Schalenmagnete auf der Oberfläche des Läufers zu schaffen.

Dies gelingt insbesondere durch Klebevorgänge, die aber, insbesondere bei bereits vormagnetisierte Schalenmagneten keine ausreichende Positionierung und Fixierung der Schalenmagneten an der Oberfläche des Läufers gewährleisten.

Durch innenliegende Magnete, die in axial verlaufenden Taschen eines Blechpaketes angeordnet sind, ist eine exakte Positionierung der Permanentmagnete innerhalb eines magnetischen Pols vergleichsweise einfach herzustellen. Jedoch müssen die innenliegenden Permanentmagnete innerhalb der Ausnehmung fixiert werden.

EP 1 898 512 A1 offenbart eine Methode zum Befestigen von Magneten auf einem Läufer. Die Magnete werden mit einer abwechselnden Magnetisierung auf dem Läufer angeordnet und mit diesem verklebt. Der Läufer weist eine sternförmige Kontur auf, so dass die Magnete in entsprechende Kerben des Läufers platziert werden können.

Ausgehend davon liegt der Erfindung die Aufgabe zugrunde, einen Läufer einer rotatorischen permanenterregten Synchronmaschine zu schaffen, der einen einfachen Aufbau aufweist, als auch vergleichsweise wenig Fehlermöglichkeiten bei der Montage bietet. Des Weiteren soll eine dementsprechende geeignete rotatorische permanenterregte Synchronmaschine bereitgestellt werden.

Die Lösung der gestellten Aufgabe gelingt durch Läufer einer rotatorischen permanenterregten Synchronmaschine, mit:
- axial geschichteten Blechen, die zumindest ein axiales Teilblechpaket bilden, wobei der Außenumfang des Teilblechpakets sternförmig gestaltet ist, derart, dass die Bleche eines Teilblechpaketes so angeordnet sind, dass sich am Außenumfang des Läufers axial verlaufende Kerben mit jeweils zwei Anlageflächen ausbilden,
- Permanentmagneten, die in den axial verlaufenden Kerben positioniert sind, wobei die zum Teilblechpaket gewandte Seiten der Permanentmagnete zumindest abschnittsweise an den Anlageflächen der Kerben, insbesondere formschlüssig anliegen,
wobei die Anlageflächen einer Kerbe an ihrem Schnittpunkt einen stumpfen Winkel bilden, wobei im Bereich des Schnittpunktes eine axial verlaufende Nut vorgesehen ist, um die Permanentmagnete besser einsetzen zu können.

Die Lösung der gestellten Aufgabe gelingt ebenso durch eine rotatorische permanenterregte Synchronmaschine mit einem erfindungsgemäßen Läufer, wobei sich zwischen dem Läufer und einem Stator ein Luftspalt befindet, der in Umfangsrichtung betrachtet, unterschiedliche radiale Ausdehnungen aufweist.

Durch die erfindungsgemäße Gestaltung des Blechpaketes des Läufers und der dazu korrespondierenden angepassten Gestaltung der Permanentmagnete, lässt sich nunmehr in einfacher Art und Weise eine Positionierung der Permanentmagnete in den jeweiligen Kerben und damit auf dem Läufer erreichen. Damit stellen sich bei der Montage der Permanentmagneten auf dem Blechpaket bzw. Teilblechpaket die angestrebten Pollücken und Pole des Läufers selbstständig ein. Ein Verrücken der Permanentmagnete, insbesondere in Umfangsrichtung, ist nunmehr ausgeschlossen.

Pro Kerbe eines Teilblechpaketes des Läufers sind dabei in axialer Richtung ein oder mehrere Permanentmagnete vorgesehen. Bei axial längeren Teilblechpaketen können dabei vorkonfektionierte axiale Längen von Permanentmagnete eingesetzt werden, so dass letztlich pro Kerbe eines Teilblechpaketes über dessen axialer Länge betrachtet zwei oder mehrere Permanentmagnete vorgesehen sind. Die Summe der axialen Längen der Permanentmagneten entspricht dann im Wesentlichen der axialen Länge eines Teilblechpakets.

Ein weiterer Vorteil des Aufbaus des Läufers durch axial aneinandergereihte Teilblechpakete, liegt darin, dass nunmehr durch eine Drehung einer oder mehrerer Teilblechpakete des Läufers zueinander in axialer Richtung des Läufers betrachtet eine Staffelung der Permanentmagnete eingestellt werden kann. Dies geschieht vorzugsweise bereits bei Positionierung der Teilblechpakete auf einer Welle. Diese Teilblechpakete werden dabei beim Aufpressen bzw. Aufschrumpfen auf die Welle jeweils in Umfangsrichtung betrachtet um einen vorbestimmten Winkel gegenüber dem anderen Teilblechpaket versetzt angeordnet. Dieser Aufbau reduziert die Drehmomentoberwellen der rotatorischen permanenterregten Synchronmaschine.

Als besonders vorteilhaft hat es sich herausgestellt, wenn die Anlageflächen einer Kerbe einen stumpfen Winkel einschließen, so dass ein vergleichsweise großer Bereich von den Permanentmagneten eingenommen werden kann.

Um eine ausreichende Fixierung der Permanentmagnete in den Kerben zu erhalten, ist eine Klebung zwischen den Anlageflächen der Kerbe und den zu dem Teilblechpaket gewandten Seiten der Permanentmagnete zumindest abschnittsweise vorgesehen. Bei höheren Drehzahlen ist alternativ oder ergänzend auch eine Bandage am Außenumfang vorzusehen.

Die Permanentmagnete weisen entweder eine quasi radiale oder parallele Magnetisierung auf, wobei bei einer quasi radialen Magnetisierung die Magnetfeldlinien selbst nahezu senkrecht aus der Oberfläche des Permanentmagneten austreten und somit zu einer weiteren Reduzierung der Drehmomentwelligkeit führen.

Vorteilhafter Weise wird ein derartiger Läufer bei rotatorischen permanenterregten Synchronmaschinen eingesetzt, wobei sich dabei der Luftspalt zwischen Läufer und einem Stator der Synchronmaschine in Umfangsrichtung betrachtet, ändert. Dabei ist der Luftspalt im Bereich zwischen Stator und einem einer Polmitte eines magnetischen Pols vergleichsweise kleiner als zwischen einer Pollücke und dem Stator. Dies reduziert zusätzlich die Drehmomentwelligkeit, so dass neben der Staffelung der Teilblechpakete und der radialen bzw. quasiradialen Magnetisierung weitere Maßnahme vorgesehen ist um die Drehmomentwelligkeit der rotatorischen permanenterregten Synchronmaschine zu reduzieren.

Die Erfindung sowie weitere vorteilhafte Ausgestaltungen der Erfindung werden anhand der nachfolgenden Ausführungsbeispiele näher erläutert; darin zeigen:
- FIG 1: ein Blechpaket eines Läufers,
- FIG 2: mehrere Teilblechpakete eines Läufers,
- FIG 3: Teilblechpakete eines Läufers mit Permanentmagneten,
- FIG 4: Teilblechpakete eines Läufers auf einer Welle,
- FIG 5, 6: Permanentmagnete,
- FIG 7: rotatorische permanenterregte Synchronmaschine.

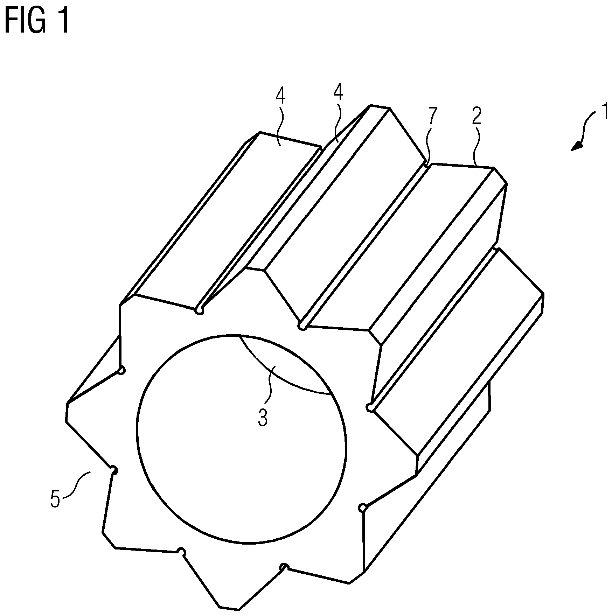

FIG 1 zeigt in perspektivischer Darstellung ein Teilblechpaket 2 eines Läufers 1, das am Außenumfang sternförmig ausgebildet ist. Das Teilblechpaket 2 zeigt eine Wellenbohrung 3 in die eine Welle 9 eingesetzt wird. Eine drehfeste Verbindung zwischen Teilblechpaket und Welle 9 wird durch Schrumpfprozesse, Passfederverbindungen oder andere Welle-Nabe-Verbindungen geschaffen. Das Teilblechpaket 2 des Läufers 1 zeigt des Weiteren in axialer Richtung verlaufende Kerben 5, in die später Permanentmagnete 6 eingesetzt werden. Jede Kerbe 5 weist zwei gegenüberliegende Anlageflächen 4 auf, die an einen gemeinsamen Schnittpunkt 7 in dieser Ausführungsform einen stumpfen Winkel bilden. Im Bereich des Schnittpunktes 7 ist eine axial verlaufende Nut vorgesehen, um die Permanentmagnete 6 besser einsetzen zu können.

Am äußeren Außenumfang des Teilblechpaketes 2, in der späteren Pollücke 10, ist das Teilblechpaket 2 entsprechend dem Radius einer Statorbohrung oder eben ausgeführt.

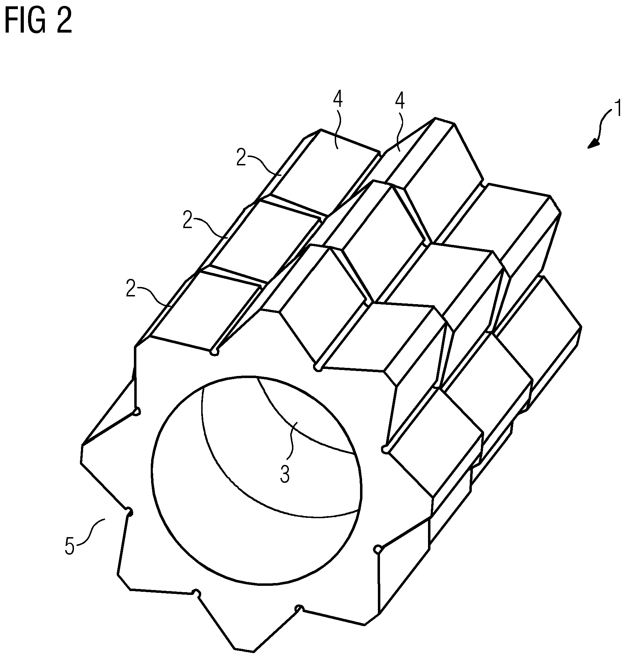

FIG 2 zeigt in einer weiteren Ausgestaltung eines Läufers 1 mehrere axial hintereinander angeordnete Teilblechpakete 2, die um einen vorgegebenen Winkel in Umfangsrichtung gegeneinander versetzt angeordnet sind. Ansonsten entspricht der konstruktive Aufbau der Teilblechpakete 2 dem in FIG 1 beschriebenen Aufbau.

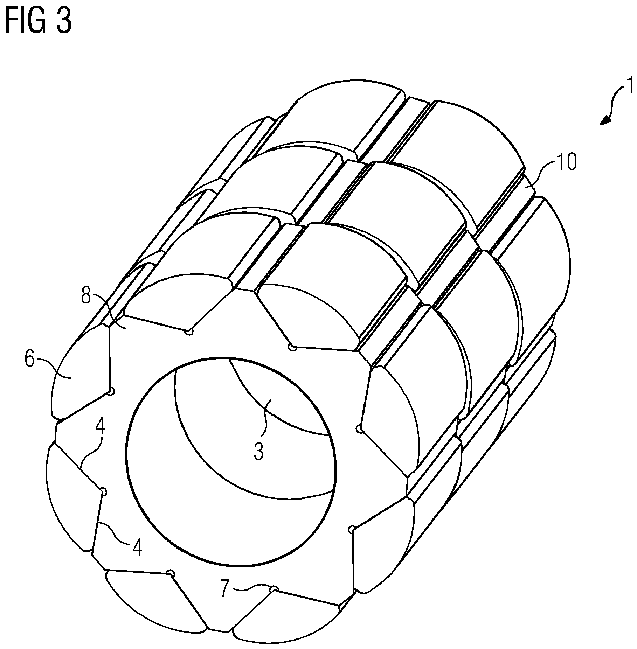

FIG 3 zeigt eine Anordnung von Teilblechpaketen 2 gemäß FIG 2, die nunmehr mit Permanentmagneten 6 versehen sind. Die Permanentmagnete 6 sind dabei in ihrem Querschnitt kreissegmentförmig ausgebildet und korrespondieren formschlüssig mit den Anlageflächen 4 der jeweiligen Kerben 5. In dieser perspektivischen Darstellung des Läufers 1 ist außerdem die Schrägung der Permanentmagnete 6 eines Magnetpols über die axiale Länge des Läufers 1 zu sehen. Dabei wird das Teilblechpaket 2 um einen vorgegebenen Winkel in Umfangsrichtung gegenüber den vorhergehenden Teilblechpaket 2 verdreht, so dass sich über die axiale Länge betrachtet, eine Staffelung der Permanentmagnete 6 eines Magnetpols ergibt.

Zur Fixierung der Permanentmagnete 6 in ihrer jeweiligen Kerbe 5 wird ein Kleber zwischen den zu den Anlageflächen weisenden Seiten der Permanentmagnete 6 und den Anlageflächen 4 der jeweiligen Kerbe 5 verwendet. Der Kleber wird zumindest abschnittsweise an diesen Flächen eingesetzt.

Alternativ zu dieser Befestigungsart oder auch ergänzend, je nach Drehzahl der rotatorischen permanenterregten Synchronmaschine und den damit zu erwartenden Fliehkräften, wird am Außenumfang des Läufers 1 eine in dieser Darstellung nicht näher dargestellte Bandage eingesetzt, die der zusätzlichen Fixierung der Permanentmagnete 6 auf den jeweiligen Teilblechpaketen 2 dient.

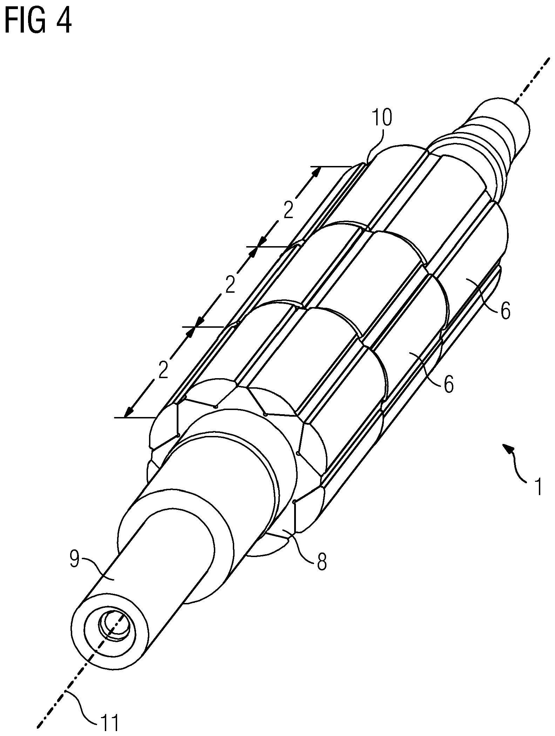

FIG 4 zeigt in perspektivischer Darstellung das Blechpaket des Läufers 1 mit drei Teilblechpaketen 2, die jeweils gegenüber dem vorhergehenden Teilblechpaket um einen vorgegebenen Winkel versetzt angeordnet sind. Die Teilblechpakete 2 sind auf der Welle 9 drehfest positioniert, vorteilhafterweise aufgeschrumpft. Die axiale Länge eines Blechpakets und die axiale Länge der Permanentmagnete korrelieren miteinander, derart, dass die axiale Länge eines Teilblechpakets 2 ein Ganzzahliges Vielfaches der axialen Länge der Permanentmagneten 6 des jeweiligen Teilblechpakets 2 bildet. Damit lässt sich in einfacher Weise auch bei unterschiedlichen axialen Längen der Teilblechpakete dieselbe axiale Länge von Permanentmagneten 6 einsetzen.

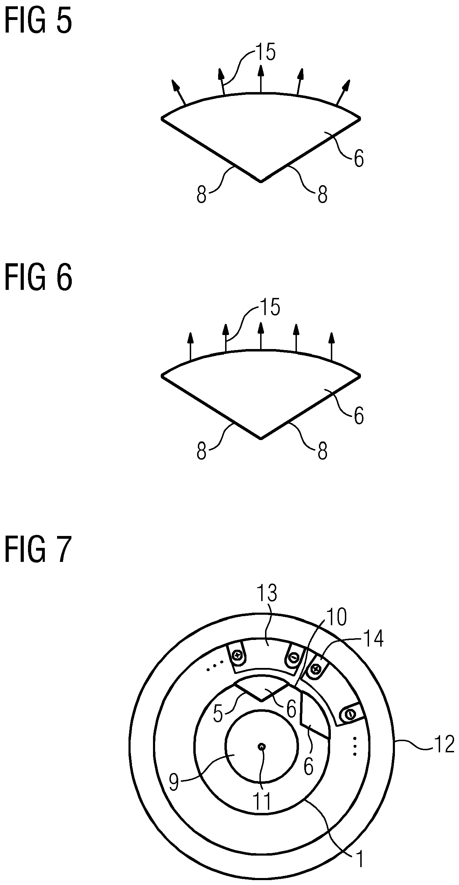

FIG 5 zeigt in prinzipieller Darstellung einen Permanentmagneten 6, der im Querschnitt betrachtet kreissegmentförmig ausgeführt ist, wobei in dieser Ausführungsform der Permanentmagnet 6 eine quasi radiale Magnetisierung aufweist. D.h. der zu einem Luftspalt einer nicht näher dargestellten elektrischen Maschine weisenden Seite des Permanentmagneten 6, treten die Feldlinien 15 unter einem Winkel von ca. 90 Grad aus der Oberfläche des Permanentmagneten 6 aus. Damit wird die Drehmomentwelligkeit der dynamoelektrischen Maschine verringert.

In einer weiteren Ausführungsform gemäß FIG 6 sind parallel verlaufende Feldlinien 15 vorgesehen, so dass diese über die gesamte zum Luftspalt weisende Fläche unterschiedliche Austrittswinkel aus der gekrümmten Oberfläche des Permanentmagneten 6 aufweisen.

Zur weiteren Reduzierung der Drehmomentenwelligkeit, wird neben der quasi radialen Magnetisierung gemäß FIG 5 und der Staffelung der Permanentmagnete eines Magnetpols über die axiale Länge des Läufers 1 auch eine Krümmung des Permanentmagneten 6 zum Luftspalt der dynamoelektrischen Maschine hin ausgeführt, derart, dass der Luftspalt zwischen Permanentmagnetoberfläche und Stator im Bereich der Polmitte geringer ist, als an den Seiten des Permanentmagneten 6 zur Pollücke 10 hin.

FIG 7 zeigt im Querschnitt den prinzipiellen Aufbau einer rotatorischen dynamoelektrischen permanenterregten Synchronmaschine, die in diesem Fall als Servomotor ausgebildet ist. Dabei ist der Läufer 1 gemäß den bisher aufgeführten Figuren ausgeführt und dreht sich um eine Achse 11. Das, oder die Teilblechpakete 2 sind dabei auf einer Welle 9 aufgeschrumpft und können somit durch diese drehfeste Verbindung das Drehmoment der rotatorischen permanenterregten Synchronmaschine auf die Welle 9 übertragen.

Auf den sternförmig ausgebildeten Teilblechpaketen 2 des Läufers 1 sind die Permanentmagnete 6 positioniert, entweder durch Kleber und/oder durch eine Bandage, die im Außenumfang die Permanentmagnete 6 an den jeweiligen Teilblechpaketen 2 fixiert. Im Betrieb der dynamoelektrischen Maschine tritt über den Luftspalt eine elektromagnetische Wechselwirkung zwischen dem Läufer 1 und dem Drehfeld eines Stators 12 ein, das auf den Läufer 1 drehmomentbildend wirkt.

Ein elektromagnetisches Drehfeld wird durch eine Wicklung 14 im Stator 12 erzeugt, das auch letztendlich zur Rotation des Läufers 1 führt. Die Wicklung 14 ist dabei in dieser Ausführung als Zahnspulenwicklung ausgeführt, d.h. jeder Zahn 13 ist mit einer Spule versehen.

Stator 12 und Läufer 1 weisen vorzugsweise axial geschichtete Bleche auf. Die magnetfeldführenden Teile von Stator 12 und Läufer 1 können auch aus einem einstückigen magnetfeldführenden Kompositmaterial bestehen.

Eine Anwendung derartiger rotatorischer permanenterregter Synchronmaschine ist vor allem bei Antrieben in Werkzeugmaschinen gegeben, da dort hohe Anforderungen an gleichmäßiges Drehmoment ohne hohe Drehmomentwelligkeit gestellt werden.

## Patentansprüche

1. Läufer (1) einer rotatorischen permanenterregten Synchronmaschine, mit:
- axial geschichteten Blechen, die zumindest ein axiales Teilblechpaket (2) bilden, wobei der Außenumfang des Teilblechpakets (2) sternförmig gestaltet ist, derart, dass die Bleche eines Teilblechpaketes (2) so angeordnet sind, dass sich am Außenumfang des Läufers (1) axial verlaufende Kerben (5) mit jeweils zwei Anlageflächen (4) ausbilden,
- Permanentmagneten (6), die in den axial verlaufenden Kerben (5) positioniert sind, wobei die zum Teilblechpaket (2) gewandte Seiten der Permanentmagnete (6) zumindest abschnittsweise an den Anlageflächen (4) der Kerben (5), insbesondere formschlüssig anliegen,
wobei die Anlageflächen (4) einer Kerbe (5) an ihrem Schnittpunkt (7) einen stumpfen Winkel bilden,
**dadurch gekennzeichnet, dass**
im Bereich des Schnittpunktes (7) eine axial verlaufende Nut vorgesehen ist, um die Permanentmagnete (6) besser einsetzen zu können.

2. Läufer (1) nach Anspruch 1, **dadurch gekennzeichnet, dass** jede Kerbe (5) eines Teilblechpaketes (2) einen oder mehrere Permanentmagnete (6) aufweist.

3. Läufer (1) nach Anspruch 1 oder 2, **dadurch gekennzeichnet, dass** bei zwei oder mehreren axial hintereinander angeordneten Teilblechpaketen (2) des Läufers (1) diese Teilblechpakete (2) gegeneinander - in Umfangsrichtung betrachtet - um einen vorgebbaren Winkel versetzt angeordnet sind.

4. Läufer (1) nach einem der vorhergehenden Ansprüche,
**dadurch gekennzeichnet , dass** die zum Teilblechpaket (2) gewandten Seiten (8) der Permanentmagnete (6) mit den jeweiligen Anlageflächen (4) zumindest abschnittsweise verklebt sind.

5. Läufer (1) nach einem der vorhergehenden Ansprüche,
**dadurch gekennzeichnet, dass** die Permanentmagnete (6) eine zum Außenumfang weisende quasi radiale oder parallele Magnetisierung aufweisen.

6. Rotatorische permanenterregte Synchronmaschine mit einem Läufer (1) nach einem der vorhergehenden Ansprüche 1 bis 5, wobei sich zwischen dem Läufer (1) und einem Stator (12) ein Luftspalt befindet, der in Umfangsrichtung betrachtet, unterschiedliche radiale Ausdehnungen aufweist.

7. Rotatorische permanenterregte Synchronmaschine nach Anspruch 6, **dadurch gekennzeichnet, dass** der Luftspalt im Bereich einer Polmitte die geringste radiale Ausdehnung aufweist und im Bereich der Pollücken (10) die maximale radiale Ausdehnung des Luftspaltes aufweist.

8. Werkzeugmaschine mit zumindest einer rotatorischen permanenterregten Synchronmaschine nach Anspruch 6 oder 7.

## Claims

1. Rotor (1) of a rotational permanently excited synchronous motor, having:
- axially laminated sheets which at least form an axial partial laminated core (2), wherein the outer periphery of the partial laminated core (2) is configured in a star shape, such that the sheets of a partial laminated core (2) are arranged so that axially extending notches (5) with two contact surfaces (4) each are formed at the outer periphery of the rotor (1),
- permanent magnets (6) which are positioned in the axially extending notches (5), wherein the sides of the permanent magnets (6) facing the partly laminated core (2) at least in sections abut the contact surfaces (4) of the notches (5), in particular in a form-fit manner,
wherein the contact surfaces (4) of a notch (5) form an obtuse angle at their point of intersection (7),
**characterised in that**
an axially extending groove is provided in the region of the point of intersection (7), in order the better to be able to insert the permanent magnets (6).

2. Rotor (1) according to claim 1, **characterised in that** each notch (5) of a partial laminated core (2) has one or more permanent magnets (6).

3. Rotor (1) according to claim 1 or 2, **characterised in that** in the case of two or more partial laminated cores (2) of the rotor (1) arranged axially one behind the other, said partial laminated cores (2), viewed in the peripheral direction, are arranged offset by a predeterminable angle in respect of one another.

4. Rotor (1) according to one of the preceding claims, **characterised in that** the sides (8) of the permanent magnets (6) that face the partial laminated core (2) are bonded at least in sections to the respective contact surfaces (4).

5. Rotor (1) according to one of the preceding claims, **characterised in that** the permanent magnets (6) have a quasi radial or parallel magnetisation pointing to the outer periphery.

6. Rotational permanently excited synchronous motor having a rotor (1) according to one of the preceding claims 1 to 5, wherein there is an air gap between the rotor (1) and a stator (12) which, viewed in the peripheral direction, has different radial extents.

7. Rotational permanently excited synchronous motor according to claim 6, **characterised in that** the air gap has the smallest radial extent in the region of a pole centre and has the maximum radial extent of the air gap in the region of the pole gaps (10).

8. Machine tool having at least one rotational permanently excited synchronous motor according to claim 6 or 7.

## Revendications

1. Rotor (1) d'une machine synchrone tournante à excitation permanente, comprenant :
- des tôles feuilletées axialement, qui forment au moins un sous-paquet (2) de tôles axial, le pourtour extérieur du sous-paquet (2) de tôles étant conformé en étoile, de manière à ce que les tôles d'un sous-paquet (2) de tôles soit disposées de façon à constituer des encoches (5) s'étendant axialement sur le pourtour extérieur du rotor (1) et ayant chacune deux surfaces (4) de contact,
- des aimants (6) permanents, qui sont mis en position dans les encoches (5) s'étendant axialement, les côtés, tournés vers le sous-paquet (2) de tôles, des aimants (6) permanents s'appliquant notamment à complémentarité de forme, au moins par partie aux surfaces (4) de contact des encoches (5),
les surfaces (4) de contact d'une encoche (5) faisant, à leur point (7) d'intersection, un angle obtus,
**caractérisé en ce qu'**
il est prévu, dans la partie du point (7) d'intersection, une rainure s'étendant axialement afin de mieux pouvoir insérer les aimants (6) permanents.

2. Rotor suivant la revendication 1, **caractérisé en ce que** chaque encoche (5) d'un sous-paquet (2) de tôles a un ou plusieurs aimants (6) permanents.

3. Rotor suivant la revendication 1 ou 2, **caractérisé en ce que** s'il y a deux ou plusieurs sous-paquets (2) de tôles disposés les uns derrière les autres axialement du rotor (1), ces sous-paquets (2) de tôles sont décalés les uns par rapport aux autres - considéré dans la direction périphérique - d'un angle pouvant être donné à l'avance.

4. Rotor suivant l'une des revendications précédentes,
**caractérisé en ce que** les côtés (8), tournés vers le sous-paquet (2) de tôles, des aimants (6) permanents, sont collés, au moins par endroit, aux surfaces (4) de contact respectives.

5. Rotor suivant l'une des revendications précédentes,
**caractérisé en ce que** les aimants (6) permanents ont une aimantation quasi radiale ou parallèle tournée vers le pourtour extérieur.

6. Machine synchrone tournante à excitation permanente ayant un rotor (1) suivant l'une des revendications précédentes 1 à 5, dans laquelle il se trouve, entre le rotor (1) et un stator (2), un entrefer, qui, considéré dans la direction périphérique, a des étendues radiales différentes.

7. Machine synchrone tournante à excitation permanente suivant la revendication 6, **caractérisée en ce que** l'entrefer a, dans la région d'un milieu polaire l'étendue radiale la plus petite et, dans la région des espaces interpolaires, l'étendue radiale maximum.

8. Machine-outil comprenant au moins une machine synchrone tournante à excitation permanente suivant la revendication 6 ou 7.
